# NOUVEAU FASCICULE DE BREVET EUROPEEN

(11) **EP 0 517 572 B2**
(45) Date de publication et mention de la décision concernant l'opposition: **12.09.2001**
(45) Mention de la délivrance du brevet: 02.01.1997
(21) Numéro de dépôt: 92401491.3
(22) Date de dépôt: 01.06.1992
(51) Int. Cl.: B21D 53/26, F16H 1/04, F16H 55/44, B21H 1/04

(54) **Procédé de fabrication d'une poulie, dispositif pour la mise en oeuvre et poulie obtenue**
Verfahren zur Herstellung einer Riemenscheibe, Vorrichtung zu ihrer Herstellung und so hergestellte Riemenscheibe
Method of making a pulley, apparatus for making the same and pulley so produced

(30) Priorité: 06.06.1991 FR 9106883
(43) Date de publication de la demande: 09.12.1992
(73) Titulaire: AUBECQ AUXI S.A., F-62390 Auxi-le-Chateau (FR)
(72) Inventeur: Guevel, Guy, F-62520 Le Touquet (FR); Dufresne, Louis, F-62390 Auxi-le-Chateau (FR)
(74) Mandataire: Polus, Camille

(56) Documents cités:
- EP-A- 0 164 707
- EP-A- 0 329 925
- DE-A- 3 917 925
- DE-C- 3 222 666
- DE-T- 3 991 700
- DE-U- 8 520 747
- FR-A- 1 339 227
- US-A- 4 876 876

## Description

La présente invention concerne une poulie à gorges multiples comportant une partie latérale, formant, par exemple, roue d'impulsion.

On utilise de telles poulies sur certains moteurs à combustion interne pour d'une part assurer l'entraînement en rotation d'organes de puissance à partir de l'arbre de vilebrequin par l'intermédiaire de courroies striées et d'autre part assurer le fonctionnement d'un système électronique à partir de la roue d'impulsion.

De tels ensembles formant poulie et roue d'impulsion, en particulier lorsque le diamètre nominal de la roue est nettement plus grand que le diamètre nominal de la poulie, sont réalisés par usinage de deux éléments distincts qui sont ensuite fixés l'un à l'autre.

Certains ensembles poulie-roue d'impulsion monoblocs sont obtenus par usinage d'une pièce moulée en fonte ou en acier.

De tels ensembles qu'ils soient en deux parties ou monoblocs, sont lourds et coûteux.

On connaît aussi d'après DE-G-85 20747.0 une poulie-roue d'impulsion monobloc, réalisée par emboutissage, mais ce procédé de fabrication implique des formes relativement complexes et des déformations du métal qui se traduisent par une fragilisation de la pièce, au moins dans certaines zones.

Les brevets FR-A-2553851 et DE-A-3917925 (le brevet DE-A-3917925 représent l'état de technique le plus proche) décrivent par ailleurs un procédé permettant d'obtenir une poulie à gorges multiples de poids réduit à partir d'une tôle métallique.

Selon ce procédé, on fait fluer le métal de la portion périphérique d'un disque plat circulaire en repoussant la portion périphérique du disque jusqu'à former un flanc cylindrique d'épaisseur sensiblement constante, coaxial au disque et s'étendant de part et d'autre de celui-ci, puis on forme une série de gorges dans la surface extérieure du flanc.

Dans le FR-A-2553851, on peut en outre envisager de fixer une roue d'impulsion usinée, sur une poulie obtenue par le procédé décrit ci-dessus.

Cependant un tel ensemble reste relativement lourd et coûteux du fait du poids de la roue et du mode de fixation de celle-ci sur la poulie.

Pour remédier à ces inconvénients, l'invention a pour but, en utilisant les principes du brevet FR-A-2553851, de fournir un ensemble monobloc formant poulie et roue d'impulsion par déformation d'une tôle métallique, l'ensemble étant d'un coût et d'un poids réduits tout en étant particulièrement résistant.

A cet effet l'invention a pour objet un procédé de fabrication d'une poulie à gorges multiples selon lequel on fait fluer le métal de la portion périphérique d'un disque sensiblement plat en repoussant la portion périphérique du disque jusqu'à former un flanc cylindrique, coaxial au disque et s'étendant de part et d'autre de celui-ci, puis on forme une série de gorges dans la surface extérieure du flanc, caractérisé en ce que dans l'étape consistant à former le flanc cylindrique, on forme également au moins un rebord radial s'étendant vers l'extérieur à partir d'au moins un des bords du flanc, puis on soumet le rebord à une opération de formage de dents qui est effectuée soit avant l'étape de formation des gorges, soit après cette dernière.

Selon d'autres caractéristiques :
- préalablement à l'opération de formage, le rebord est soumis à un traitement de recuit pour augmenter sa ductilité ;
- l'opération de formage du rebord consiste à transformer le rebord en une roue dentée coaxiale au flanc ;
- préalablement à l'étape consistant à former le flanc cylindrique un moyeu est formé au centre du disque.

L'invention a également pour objet un dispositif pour la mise en oeuvre du procédé comportant des moyens de retenue par serrage d'une partie centrale du disque, de telle sorte qu'une couronne périphérique du disque s'étend à l'extérieur des moyens de retenue, des moyens pour entraîner en rotation autour de l'axe du disque l'ensemble disque-moyens de retenue, caractérisé en ce qu'il comporte en outre deux organes annulaires fixés sur la face extérieure des moyens de retenue de part et d'autre de la couronne et délimitant axialement par une face radiale un volume annulaire ouvert radialement vers l'extérieur ayant pour fond la face extérieure des moyens de retenue, au moins une mollette à surface externe au moins en partie cylindrique, montée rotative sur un arbre parallèle à l'axe du disque et déplaçable radialement, la molette étant située en vis-à-vis de l'ouverture du volume et déplaçable avec l'arbre entre une position de repos et une position active dans laquelle au moins une face radiale d'extrémité de la molette est en vis-à-vis de la face plane de l'organe annulaire adjacent, en étant écartée axialement de celle-ci d'une distance sensiblement égale à l'épaisseur prédéterminée du rebord radial à former, et des moyens pour former les gorges du flanc, et des moyens de formage des dents du au moins un rebord.

Lorsque le flanc comporte deux rebords radiaux, les deux faces radiales d'extrémité de la molette, dans la position active, sont écartées de la face plane adjacente des organes associés, d'une distance sensiblement égale à l'épaisseur prédéterminée des rebords correspondants.

Lorsque l'étape consistant à former le flanc et le rebord radial comporte deux opérations, le dispositif est adapté à cet effet et utilise une molette bi-étagée.

Le dispositif comprend de plus :
- au moins une molette portée par un arbre coaxial à l'axe du disque et déplaçable radialement, comportant sur sa face extérieure des gorges complémentaires des gorges à former ;
- des moyens de formage du rebord, comprenant une matrice cylindrique fixe comportant une première et une seconde parties disposées de part et d'autre du rebord radial et entre lesquelles une zone annulaire du rebord adjacent au bord du flanc est serrée, la périphérie du rebord faisant saillie à l'extérieur de la matrice, la première partie comportant sur sa surface extérieure des dents axiales de profil correspondant au profil de la face intérieure de la roue dentée à former, un coulisseau monté coulissant axialement le long de la première partie de la matrice et comportant sur une face radiale d'extrémité un logement annulaire recevant en position de repos la périphérie du rebord, un poinçon cylindrique creux comportant sur sa face interne des dents axiales de profil correspondant au profil de la face extérieure de la roue dentée à former, monté coulissant le long de la seconde partie de matrice entre une position de repos dans laquelle une extrémité axiale du poinçon est en appui sur le rebord et une position active dans laquelle ladite extrémité axiale se déplace le long de la première partie de matrice pour former les dents de la roue en faisant fluer le métal du rebord entre les dents de la première partie de la matrice et celles du poinçon.

En outre, l'invention a pour objet un dispositif selon la revendication 9. L'invention sera mieux comprise à la lecture de la description détaillée qui va suivre, faite en référence aux dessins annexés sur lesquels :
- La figure 1 est une vue en perspective représentant partiellement en coupe axiale une poulie obtenue par le procédé de fabrication selon l'invention ;
- la figure 2 est une demi-vue en coupe axiale d'un premier mode de réalisation d'une poulie obtenue selon l'invention ;
- la figure 3 est une vue analogue à celle de la figure 2 représentant un deuxième mode de réalisation d'une poulie selon l'invention ;
- la figure 4 est une vue analogue à celle de la figure 2 représentant un troisième mode de réalisation d'une poulie obtenue selon l'invention ;
- les figures 5 et 6 sont des vues en coupe axiale d'un dispositif de réalisation d'une poulie comportant un rebord radial s'étendant à partir d'un des bords du flanc de la poulie, le dispositif étant représenté à l'état initial et à l'état final, respectivement ;
- la figure 7 est une vue analogue à celles des figures 5 et 6 illustrant la réalisation des gorges de la face extérieure du flanc ;
- la figure 8 est une vue en coupe axiale représentant un dispositif de formage du rebord pour transformer celui-ci en roue dentée, le dispositif étant à l'état de repos ;
- la figure 9 est une vue analogue à celle de la figure 8, le dispositif étant en position active ;
- la figure 10 est une vue agrandie d'un détail repéré 10 sur la figure 9.
- les figures 11 à 14 sont des vues analogues à celles des figures 5 et 6 représentant un dispositif pour la mise en oeuvre en deux opérations de l'étape consistant à former le flanc cylindrique et le rebord radial.

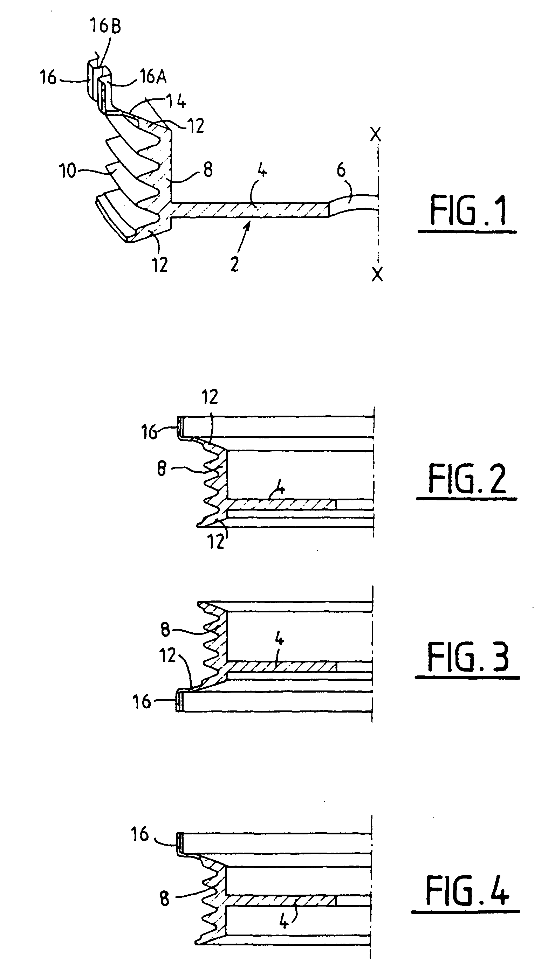

Sur la figure 1 on a représenté une poulie 2 selon l'invention comportant une âme 4 circulaire d'axe X-X, au centre de laquelle est prévu un moyeu 6 destiné à la fixation de la poulie sur un arbre (non représenté). La poulie 2 comporte un flanc cylindrique 8 coaxial à l'âme 4, s'étendant de part et d'autre de cette dernière et comportant sur sa face extérieure une série de gorges 10 s'étendant entre ses bords axiaux 12.

L'un des bords 12 du flanc 8 est prolongé radialement par un rebord 14 sensiblement radial, lui-même prolongé par une roue dentée 16 venue de matière et d'axe X-X.

Comme cela sera décrit ultérieurement, la roue dentée 16 est obtenue à partir d'une tôle métallique et comporte une face intérieure dentée 16A et une face extérieure 16B dentée.

Sur la figure 2 on a représenté en coupe axiale un premier mode de réalisation de la poulie 2 dans lequel l'âme 4 est située à proximité du bord 12 éloigné de la roue dentée 16.

Sur la figure 3 l'âme 4 est située à proximité du bord 12 adjacent à la roue dentée 16.

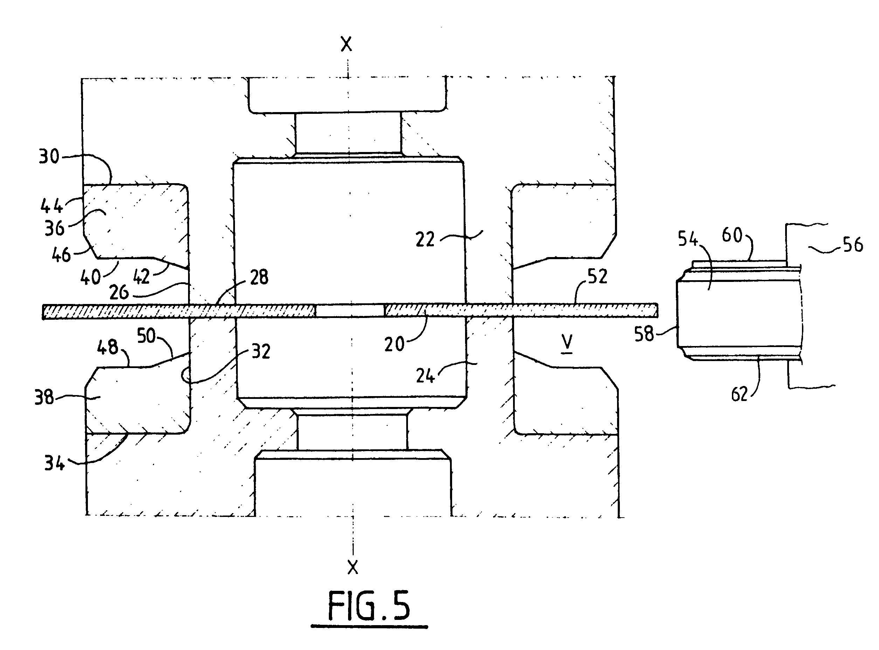

Sur la figure 4 on notera que l'âme 4 est située sensiblement dans le plan médian du flanc 8.

Bien que cela ne soit pas représenté chacune de ces poulies peut être pourvue de deux roues dentées s'étendant chacune à partir d'un des bords 12 du flanc 8.

Les éléments constituant la poulie c'est-à-dire âme, flanc, roue dentée sont venus de matière pour former une poulie monobloc.

On notera également, à la lecture de la description qui va suivre du procédé de fabrication d'une telle poulie, que la poulie est obtenue sans enlèvement de métal.

Le procédé selon l'invention consiste tout d'abord à réaliser, à partir d'un disque plat, une poulie ayant un flanc cylindrique et au moins un rebord radial s'étendant vers l'extérieur à partir d'un des bords du flanc cylindrique, puis à former des gorges dans le flanc cylindrique et enfin à conformer le rebord radial selon l'application envisagée.

A cet effet on utilise un dispositif tel que représenté sur les figures 5 à 10.

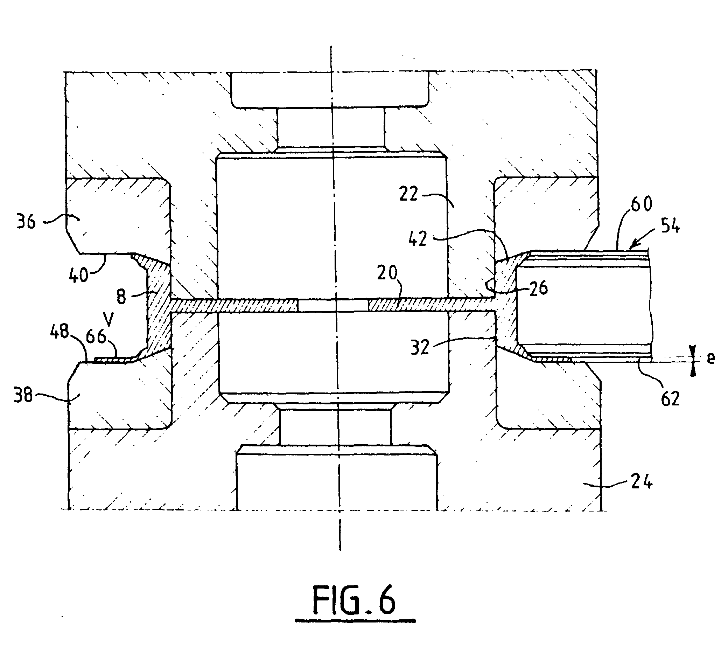

Le dispositif représenté aux figures 5 et 6, comporte des moyens de retenue constitués de deux éléments 22 et 24 situés de part et d'autre du disque 20, et entre lesquels le disque 20 est retenu par serrage entre les éléments 22 et 24. Les moyens de serrage peuvent être de tout type approprié connu et ne sont pas représentés.

Les éléments 22 et 24 sont des cylindres creux coaxiaux au disque 20 et entraînés en rotation autour de l'axe du disque destiné à constituer l'axe X-X de la poulie.

Chaque élément 22 et 24 comporte une partie étagée de diamètre réduit agencée dans sa surface extérieure, les deux parties étagées étant symétriques par rapport au plan radial médian du disque 20.

La partie étagée de l'élément 22 est délimitée par une paroi cylindrique 26 d'axe X-X, de diamètre prédéterminé, et s'étendant à partir de l'extrémité radiale 28 de l'élément 22 en contact avec le disque 20, et une paroi radiale 30.

De même, l'élément 24 comporte une partie étagée agencée dans sa surface extérieure et délimitée par une paroi cylindrique 32 située dans le prolongement de la paroi 26 et une paroi radiale 34.

Le diamètre des parois cylindriques 26 et 32 correspond au diamètre prédéterminé de la face intérieure du flanc 8 à obtenir.

Un organe annulaire 36, 38 est fixé dans la partie étagée de chacun des éléments 22 et 24 respectivement.

L'organe 36 est fixé de manière à être en contact avec la paroi radiale 30 et la paroi cylindrique 26 de l'élément 22.

L'organe 36 comporte à son extrémité opposée à la paroi 30, une face radiale plane 40 et une zone de raccordement 42 s'inclinant axialement depuis la face 40 vers l'extrémité 28 et la paroi 26 de l'élément 22.

La face 40 et la zone 42 sont écartées axialement du disque 20 d'une distance prédéterminée qui est fonction des dimensions axiales des faces extérieure et intérieure respectivement du flanc 8 à former.

La face extérieure 44 de l'organe 36 est dans le prolongement de la face extérieure de l'élément 22 et comporte une partie tronconique 46 de raccordement avec la face 40 dont la périphérie possède un diamètre plus petit que le diamètre de la face extérieure 44 de l'organe 36.

L'organe 38 est un organe symétrique de l'organe 36 par rapport au plan médian du disque 20, et comporte une face radiale plane 48 symétrique de la face 40 et une zone de raccordement 50 symétrique de la zone 42 de l'organe 36.

Une telle disposition des organes 36 et 38 délimite un volume annulaire V délimité par les parois cylindriques 26 et 32, les zones de raccordement 42 et 50 et les faces radiales planes 40 et 48. Le volume V est ouvert sur sa face extérieure.

Le disque 20 serré entre les éléments 22 et 24 possède une couronne périphérique 52 s'étendant vers l'extérieur à partir des parois cylindriques 26 et 32.

Le volume de matière composant la couronne 52 est sensiblement égal au volume de matière composant le flanc 8 et le rebord radial 14 à obtenir.

Pour former le flanc cylindrique 8 de la poulie on utilise une molette 54 montée rotative sur un arbre 56 d'axe parallèle à l'axe X-X.

La molette 54 est agencée en vis-à-vis de l'ouverture du volume V et l'arbre 56 est déplaçable radialement de manière à faire pénétrer la molette dans le volume V.

La molette 54 comporte une face cylindrique extérieure 58 s'étendant de part et d'autre du plan médian du disque 20 et deux zones de liaison avec une première et une seconde faces radiales d'extrémité 60, 62 respectivement.

Pour réaliser le flanc cylindrique 8 (voir figure 6) on fait tourner les moyens de retenue et le disque 20 autour de l'axe X-X. Puis, par déplacement radial de l'arbre 56 la molette 54 pénètre progressivement dans le volume V en exerçant une pression sur la périphérie du disque 20 en rotation, la pression étant suffisante pour faire fluer le métal constituant la couronne 52 vers les parois 26 et 32 constituant le fond du volume V.

Lors du déplacement radial de la molette 54 à l'intérieur du volume V, la première face d'extrémité radiale 60 de celle-ci est très proche de la face 40 de l'organe 36 alors que la seconde face radiale 62 est axialement écartée de la face 48 de l'organe 38. L'intervalle axial e ainsi délimité est sensiblement égal à l'épaisseur désirée pour le rebord radial 66 à former.

En effet l'action de la molette sur la couronne 52 du disque 20 a pour effet de faire fluer le métal constituant la couronne en le repoussant dans l'espace compris entre le fond du volume V, les zones de raccordement 42 et 50 et la face cylindrique 58 de la molette 54, une partie du métal fluant dans l'intervalle axial e pour constituer le rebord radial 66.

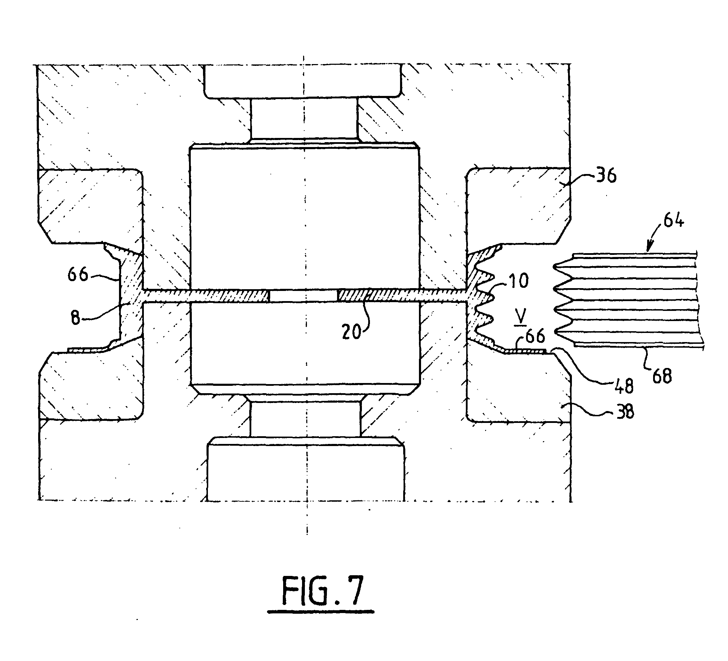

Après avoir formé le flanc 8 et le rebord 66, la molette 54 est écartée et une autre molette 64 portée par un arbre parallèle à l'axe X-X et déplaçable radialement (voir figure 7), munie sur sa surface extérieure d'une série de gorges en V complémentaires des gorges 10 à former dans la surface extérieure du flanc 8, est amenée dans le volume V.

En variante, on peut utiliser une molette similaire à ladite autre molette 64 pour former simultanément le flanc et les gorges.

La molette 64 comporte une face d'extrémité radiale 68 qui, lorsqu'elle est située dans le volume V est écartée de la face 48 de l'organe 38 de manière telle que le rebord 66 ne soit pas repoussé par la molette 64.

Pour obtenir deux rebords 66 s'étendant vers l'extérieur à partir des bords 12 du flanc 8, il suffit que la première face radiale d'extrémité 60 de la molette 54 soit également, lorsqu'elle est située à l'intérieur du volume V, écartée axialement de la face 40 de l'organe 36, l'intervalle ainsi délimité correspondant à l'épaisseur désirée pour le deuxième rebord radial 66.

Dans un mode préféré de mise en oeuvre du procédé selon l'invention, l'étape consistant à former le plan cylindrique et le rebord radial de la poulie est réalisée en deux opérations.

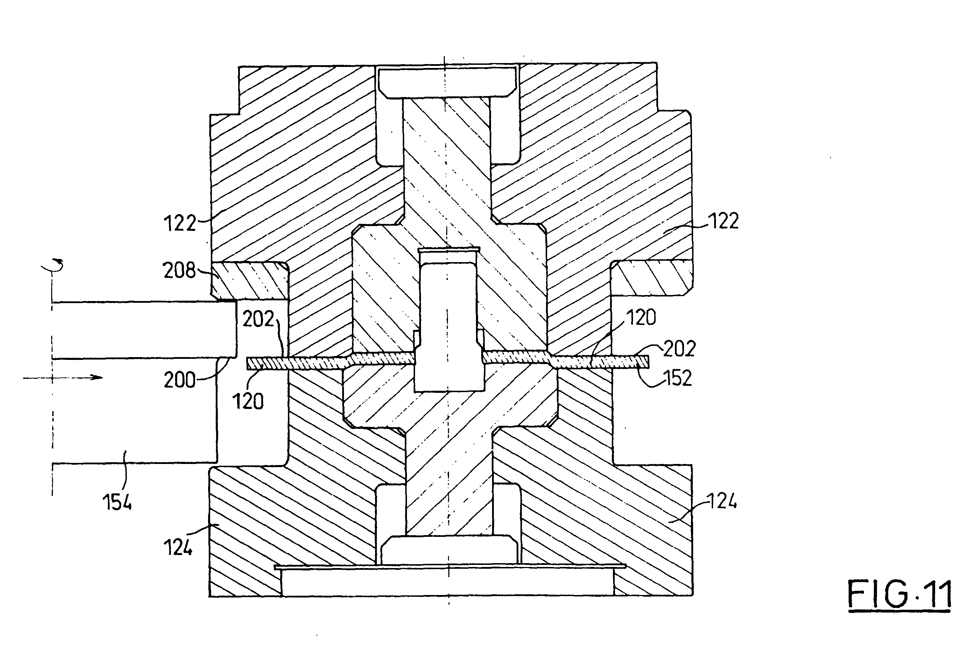

A cet effet on utilise un dispositif analogue à celui décrit en regard des figures 5 et 6, qui est représenté sur les figures 11 à 14.

Les éléments déjà décrits en regard des figures 5 et 6 sont repérés par la référence numérique correspondante augmentée de 100.

La mise en oeuvre des deux opérations successives assure une meilleure réalisation du rebord radial, en particulier lorsque le but final est d'obtenir une poulie dont l'âme est située à proximité d'un bord du flanc opposé au bord de ce dernier comportant un rebord radial, comme représentée sur la figure 2.

En effet dans un tel cas, la quantité de matière constituant le flanc et le rebord radial est inégalement répartie de part et d'autre de l'âme de la poulie.

Une telle répartition inégale de la matière est délicate à réaliser avec un dispositif permettant la mise en oeuvre de l'étape consistant à former le plan cylindrique et le rebord radial de la poulie en une seule opération, tel que représenté sur les figures 5 et 6.

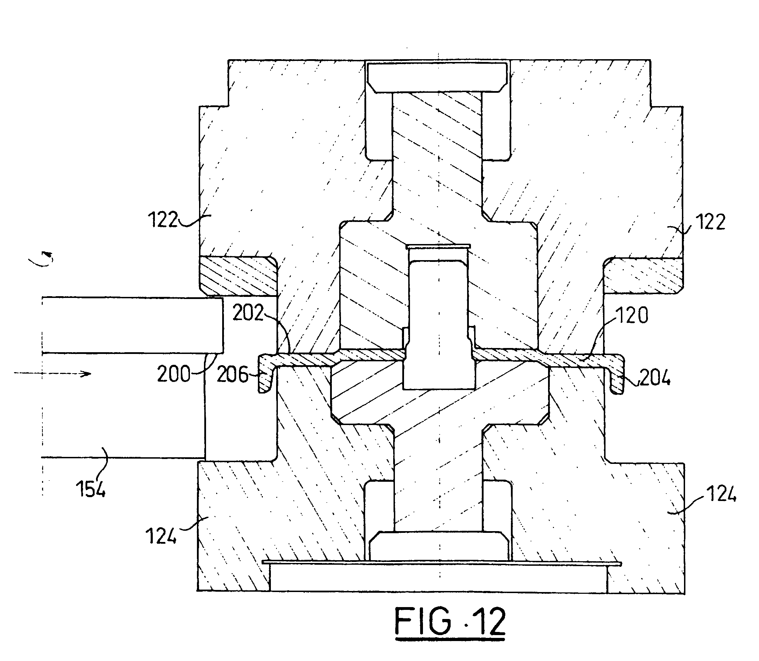

Sur les figures 11 et 12 on a représenté la première opération qui consiste à réaliser un bourrelet dissymétrique par rapport à l'âme de la poulie, ayant par rapport à cette dernière un volume de matière plus important s'étendant en direction du rebord radial à former.

Une telle première opération peut également être mise en oeuvre lorsque l'âme de la poulie s'étend symétriquement par rapport au plan médian du flanc cylindrique, puisqu'après formation du flanc et du rebord radial les volumes de matières situés de part et d'autre dudit plan médian sont inégaux.

Le dispositif pour la mise en oeuvre de cette première opération comporte (voir figures 11 et 12) des moyens de retenue 122 et 124 d'un disque 120 possédant une couronne 152 en saillie radiale à l'extérieur des moyens de retenue et comportant une face supérieure 202 radiale.

On constate sur la figure 11 que la partie du disque serrée entre les moyens de retenue est dans le prolongement radial de la couronne 152 mais est décalée axialement par rapport à la partie centrale du disque.

Cette caractéristique est une variante de réalisation de l'âme de la poulie qui ne modifie pas les enseignements de la présente invention.

Pour la mise en oeuvre de la première opération, le dispositif comporte une molette 154 (voir figure 11) possédant une surface cylindrique extérieure bi-étagée délimitant un épaulement 200 légèrement décalé axialement vers l'élément 122 par rapport au plan de la face 202 de la couronne 152. L'étage de plus grand diamètre s'étend en vis-à-vis de l'élément 122. L'élément 122 comporte une bague 208 ayant une face axiale 209 destinée à limiter la partie du volume V s'étendant en direction de l'élément 122.

Cette bague 208 n'est pas strictement nécessaire, son rôle étant de déporter axialement la face radiale 130 de l'élément 122 pour constituer une face de coulissement de la face radiale d'extrémité 211 de la molette 154 lorsque cette molette est déplacée radialement dans le volume V.

Lors de ce déplacement, avec rotation simultanée des moyens de retenue, la couronne 152 est déformée pour constituer un bourrelet 204 s'étendant vers l'élément 124 à partir de la face 202 (voir figure 12).

Le bourrelet 204 possède une surface radialement extérieure 206 sensiblement cylindrique et coaxiale au disque 120, la surface radialement intérieure 207 du bourrelet et ses extrémités radiales étant libres de forme.

En utilisant une molette dont l'épaulement 200 est décalé vers la bague 208 à partir de la surface 202, on obtient un bourrelet dissymétrique s'étendant de part et d'autre du disque 120. Cette adaptation qui est du ressort de l'homme du métier, permet de répartir la matière constituant le bourrelet en fonction des quantités de manière nécessaires pour former le flanc et le rebord radial.

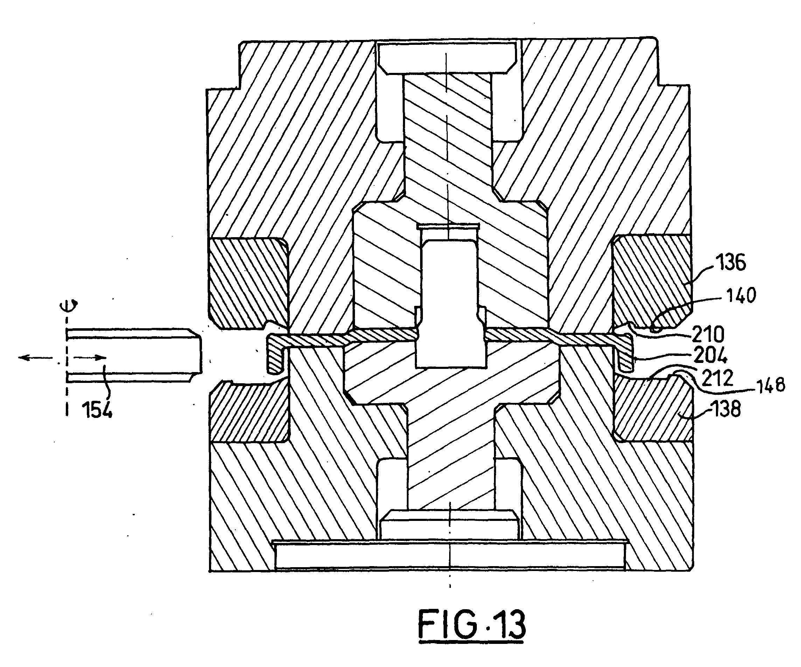

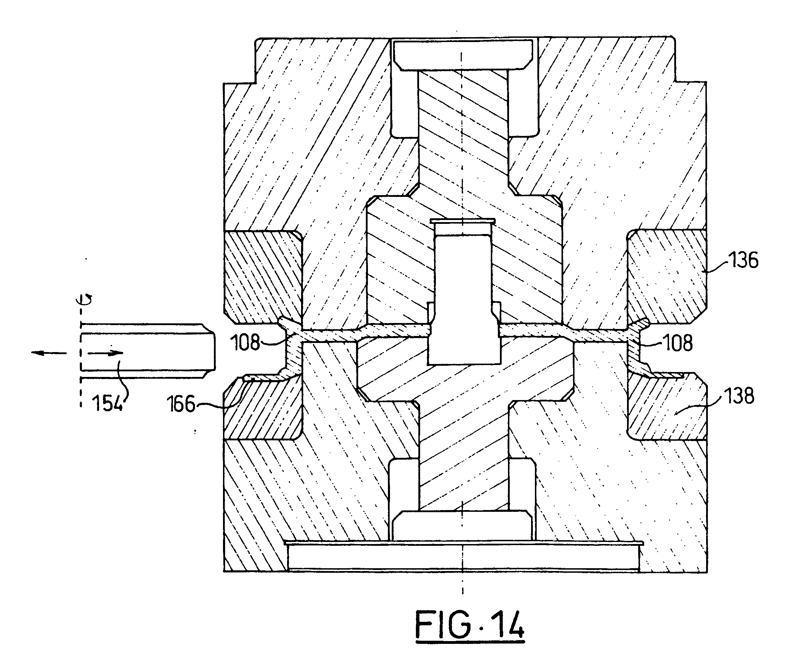

Sur les figures 13 et 14 on a représenté le dispositif adapté pour réaliser la deuxième opération qui consiste à former le flanc cylindrique et le rebord radial à partir du bourrelet.

A cet effet (voir figure 13) le dispositif décrit ci-dessus est équipé de deux éléments 136 et 138 analogues aux éléments 36 et 38 des figures 5 et 6.

On notera que la face 140 de l'élément 136 comporte une gorge annulaire 210 destinée à former le bord du flanc ne comportant pas de rebord radial, alors que la face 148 de l'élément 138 comporte un logement annulaire 212 destiné à recevoir le rebord radial et assurer la formation de ce dernier.

Pour la formation du flanc cylindrique 108 et du rebord 166, le dispositif est équipé d'une molette 154 dont les faces radiales d'extrémités 160 et 162 coulissent respectivement sur les faces 140 et 148 des éléments 136 et 138 respectivement.

Cette étape est analogue à celle décrite en regard de la figure 6.

En procédant ainsi en deux opérations on obtient un flanc et un rebord radial dont les formes sont plus précises et permettent d'obtenir ensuite une couronne dentée dont les caractéristiques sont également plus précises.

Lorsque le flanc et le rebord sont ainsi réalisés en deux opérations, l'étape consistant à former les gorges peut être réalisée comme cela a été décrit précédemment en regard de la figure 7 en une seule opération ou être réalisée en deux opérations dont la première consiste à ébaucher les gorges multiples à l'aide d'une molette d'ébauche et la seconde assure la finition des gorges à l'aide d'une molette de finition.

Ayant ainsi obtenu à l'aide de l'un des dispositifs décrits ci-dessus, un flanc comportant des gorges multiples et au moins un rebord radial 66, on soumet le rebord 66 à une opération de formage destinée à le transformer en roue dentée ou autre partie coaxiale au flanc, selon l'application prévue pour ladite autre partie.

Il est à noter que l'opération de formage du rebord 66 qui va être décrite ci-après peut être réalisée avant ou après l'étape consistant à former les gorges 10.

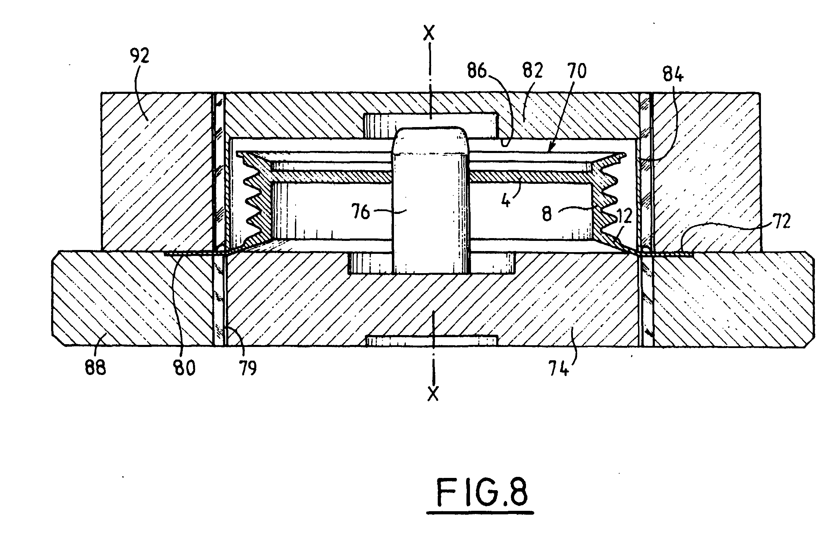

Pour réaliser l'opération de formage du rebord 66, on utilise un dispositif tel que représenté sur les figures 8 à 10.

Le dispositif représenté sur la figure 8 comporte un ensemble formant matrice cylindrique fixe constitué d'une première partie 74 munie d'un téton de centrage axial 76 faisant saillie à la surface supérieure 78 de celle-ci.

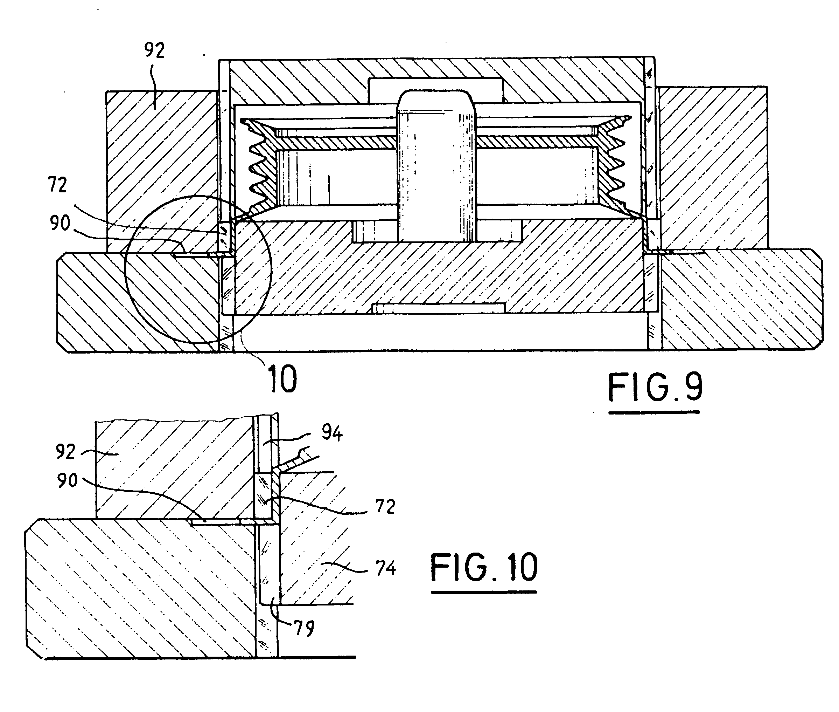

La surface extérieure de la première partie 74 comporte des dents 79 (voir également figure 10) s'étendant axialement et de profil complémentaire du profil de la face intérieure dentée 16A de la roue dentée 16 désirée (voir figure 1).

Par profil complémentaire, il faut entendre, ici et par la suite, une disposition telle que les faces délimitant les dents des profils complémentaires peuvent être mises en contact l'une avec l'autre et coulisser axialement l'une par rapport à l'autre.

La poulie est positionnée autour du téton 76, son axe X-X étant confondu avec l'axe du téton 76, le rebord 72 étant en appui sur la surface supérieure 78 de la première partie 74 le long d'une zone annulaire située à proximité du bord 12 du flanc 8 associé et comportant une zone périphérique 80 faisant saillie à l'extérieur de la première partie.

La matrice comporte également une seconde partie 82 formant organe de serrage. L'organe de serrage 82 comporte une paroi cylindrique creuse 84 d'axe X-X ayant une face radiale d'extrémité serrant contre la surface supérieure de la première partie 74 la zone du rebord 72 en appui sur cette dernière, pour maintenir la poulie en position axiale par serrage.

La paroi 84 délimite un logement 86 destiné à recevoir le flanc 8 et l'âme 4 de la poulie.

La surface extérieure de la paroi 84 comporte des dents s'étendant axialement et dont le profil est sensiblement le même que le profil de la face extérieure 16B de la roue dentée 16 désirée.

Un coulisseau annulaire 88 est monté coulissant axialement sur la surface extérieure dentée de la première partie 74. Dans la face supérieure du coulisseau 88 est prévue une gorge annulaire 90 (voir figure 10) de dimension axiale sensiblement égale à l'épaisseur du rebord 72. La gorge 90 est délimitée radialement par une face axiale cylindrique d'axe X-X dont le diamètre est au moins égal au diamètre de la périphérie du rebord 72.

Lorsque le coulisseau 88 est en position de repos comme représenté sur la figure 8, le rebord 72 est reçu dans la gorge 90.

La surface intérieure du coulisseau 88 comporte des dents axiales dont le profil est sensiblement le même que le profil de la face extérieure 16B de la roue 16, pour pouvoir coulisser entre les dents de la surface extérieure de la première partie 74 de matrice.

Un poinçon annulaire 92 est monté coulissant axialement sur la seconde partie 82 de la matrice.

A cet effet sa face intérieure comporte des dents 94 (voir également la figure 10) dont le profil est complémentaire du profil de la face extérieure 16B de la roue 16 ainsi que du profil des dents de la paroi 84.

En d'autres termes les dents du poinçon 92 coulissent sans jeu entre les dents de la deuxième partie alors qu'ils coulissent entre les dents de la matrice 74 en étant écartées de celle-ci d'une distance sensiblement égale à l'épaisseur du rebord 72.

La face inférieure du poinçon 92, en position de repos est en contact avec la face supérieure du rebord 72 situé dans la gorge 90.

En exerçant sur le poinçon 92 une pression axiale dirigée vers le bas, on entraîne le coulissement du poinçon et du coulisseau.

Lors de ce coulissement (voir figure 9) la partie de rebord 72 située dans la gorge 90 est déformée sous l'action des dents du poinçon 92 en fluant dans l'espace existant entre les dents du poinçon 92 et les dents de la matrice 74 pour former la roue dentée 16.

Afin de faciliter cette déformation, le rebord 72, en variante, est soumis à un traitement thermique préalable afin d'accroître sa ductilité. Le traitement thermique consiste, par exemple, en un recuit de cristallisation de la partie métallique constitutive du rebord radial. Le chauffage de ce rebord est assuré par exemple par un générateur à induction géométriquement adapté à la zone de chauffe si bien que seule la couronne contigüe au profil à gorges multiples est chauffée et portée en température, les gorges de la poulie n'étant pas altérées thermiquement. Dans un exemple de réalisation de ce traitement thermique, les paramètres sont les suivants:
- température de consigne : 800°C (+ - 50°C)
- temps de montée en température : 30"
- temps de maintien en température : 50"
- état de dureté de la zone à recuire avant traitement : environ 80 HRB
- dureté de cette zone après récuit : inférieure à 40 HRB.
   Le procédé selon l'invention, mis en oeuvre à l'aide des dispositifs décrits ci-dessus permet de réaliser sans enlèvement de matière, un ensemble poulie-roue dentée monobloc, possédant l'avantage d'être d'un poids réduit du fait que la roue dentée possède une épaisseur réduite, et de réalisation peu coûteuse.

## Revendications

1. Procédé de fabrication d'une poulie (2) à gorges multiples selon lequel on fait fluer le métal de la portion périphérique (52 ; 152) d'un disque sensiblement plat (20 ; 120) en repoussant la portion périphérique du disque jusqu'à former un flanc cylindrique (8 ; 108), coaxial au disque et s'étendant de part et d'autre de celui-ci, puis on forme une série de gorges dans la surface extérieure du flanc, **caractérisé en ce que** dans l'étape consistant à former le flanc cylindrique, on forme également au moins un rebord radial (66 ; 166) s'étendant vers l'extérieur à partir d'au moins un des bords du flanc, puis on soumet le rebord à une opération de formage de dents qui est effectuée soit avant l'étape de formation des gorges, soit après cette dernière.

2. Procédé selon la revendication 1, **caractérisé en ce que** l'étape consistant à former le flanc cylindrique (108) et le rebord radial (166) comporte une première opération consistant à former un bourrelet (204) à la périphérie du disque (120), le bourrelet ayant une face extérieure sensiblement cylindrique coaxiale au disque, et une seconde opération consistant à réaliser le flanc et le rebord radial à partir du bourrelet obtenu par la première opération.

3. Procédé selon la revendication 2, **caractérisé en ce que** le bourrelet (204) est dissymétrique par rapport au plan général du disque et délimite deux volumes de matières inégaux s'étendant de part et d'autre du plan général du disque et adaptés aux volumes de matière prédéterminés à obtenir de part et d'autre du plan du disque de la poulie à réaliser.

4. Procédé selon l'une quelconque des revendications 1 à 3, **caractérise en ce que** préalablement à l'opération de formage, le rebord est soumis à un traitement de recuit pour augmenter sa ductilité.

5. Procédé selon l'une quelconque des revendications 1 à 3, **caractérisé en ce que** l'opération de formage du rebord consiste à transformer le rebord en une roue dentée coaxiale au flanc.

6. Procédé selon l'une quelconque des revendications précédentes, **caractérisé en ce que** préalablement à l'étape consistant à former le flanc cylindrique, un moyeu est formé au centre du disque.

7. Dispositif pour la mise en oeuvre du procédé selon la revendication 1, comportant des moyens de retenue (22, 24) par serrage d'une partie centrale du disque (20) de telle sorte qu'une couronne périphérique (52) du disque s'étend à l'extérieur des moyens de retenue, **caractérisé en ce qu'**il comprend en outre des moyens pour entraîner en rotation autour de l'axe du disque l'ensemble disque-moyen de retenue, **caractérisé en ce qu'**il comprend en outre deux organes annulaires (36, 38) fixés sur la face extérieure des moyens de retenue de part et d'autre de la couronne et délimitant axialement par une face radiale (40, 48) un volume annulaire (V) ouvert radialement vers l'extérieur ayant pour fond la face extérieure (26, 32) des moyens de retenue, au moins une molette (54) à surface externe cylindrique est montée rotative sur un arbre (56) parallèle à l'axe du disque (20) et déplaçable radialement, la molette (54) étant située en vis-à-vis de l'ouverture dudit volume (V) et déplaçable avec l'arbre entre une position de repos et une position active dans laquelle au moins une face radiale de la molette est en vis-à-vis de la face plane (48) de l'organe annulaire adjacent (38) en étant écartée axialement de celle-ci d'une distance (e) sensiblement égale à l'épaisseur prédéterminée du rebord radial (66) à former, des moyens pour former les gorges (10) du flanc, et des moyens de formage des dents du au moins un rebord (66).

8. Dispositif selon la revendication 7, **caractérise en ce que** lorsque le flanc comporte deux rebords radiaux les deux faces radiales d'extrémités (60) de la molette dans la position active sont écartées de la face adjacente des organes associés, d'une distance sensiblement égale à l'épaisseur prédéterminée des rebords correspondants.

9. Dispositif pour la mise en oeuvre du procédé selon la revendication 2 ou 3, qui pour réaliser la première opération, comporte des moyens de retenue (122, 124) par serrage d'une partie du disque (120) de telle sorte qu'une couronne périphérique (152) du disque s'étend à l'extérieur des moyens de retenue dans un volume ouvert radialement (V) délimité par une face extérieure cylindrique des moyens de retenue formant fond du volume et par deux surfaces radiales des moyens de retenue situées de part et d'autre du disque, des moyens pour entraîner en rotation autour de l'axe du disque l'ensemble disque-moyens de retenue, et une molette (154) montée rotative sur un arbre parallèle à l'axe du disque (120) et déplaçable radialement dans ledit volume (V), la molette (154) possédant une surface extérieure cylindrique bi-étagée délimitant un épaulement radial (200) disposé d'un côté du disque (120) pour former un bourrelet s'étendant à partir de l'épaulement (200) entre le fond dudit volume (V) et la face de l'étage de plus petit diamètre de la molette,
**caractérisé en ce que** pour effectuer la seconde opération, il comporte deux organes annulaires (136, 138) fixés à l'intérieur dudit volume (V) de part et d'autre du disque (120), un premier (136) organe annulaire ayant une face radiale d'extrémité (140) munie d'une gorge annulaire (210) pour la formation d'un bord du flanc cylindrique à obtenir, le second (138) organe annulaire ayant une face radiale d'extrémité en vis-à-vis et écartée axialement de la face d'extrémité (140) du premier organe annulaire (136) et comportant un logement (212) pour recevoir le rebord radial (66) lors de la mise en oeuvre de la seconde opération, et une molette de surface extérieure cylindrique montée rotative autour d'un arbre et déplaçable radialement pour former le flanc et le rebord radial par mise en rotation des moyens de retenue.

10. Dispositif selon l'une quelconque des revendications 7 à 9, **caractérisé en ce qu'**il comporte au moins une autre molette (64) portée par un arbre parallèle à l'axe du disque (20, 120) et déplaçable radialement, ladite autre molette (64) comportant sur sa face externe des gorges complémentaires des gorges à former, ladite autre molette (54) constituant des moyens de formation des gorges.

11. Dispositif selon la revendication 7 ou 9 et pour la mise en oeuvre du procédé selon la revendication 5, **caractérisé en ce qu'**il comporte une matrice cylindrique fixe comportant une première (74) et une seconde (82) parties disposées de part et d'autre du rebord radial (72) et entre lesquelles une zone annulaire du rebord adjacent au bord du flanc est serrée, la périphérie (80) du rebord faisant saillie à l'extérieur de la matrice, la première partie (74) comportant sur sa surface extérieure des dents (79) axiales de profil correspondant au profil de la face intérieure (16A) de la roue dentée à former, un coulisseau (88) monté coulissant axialement le long de la première partie (74) de la matrice et comportant sur une face radiale d'extrémité un logement annulaire (90) recevant en position de repos la périphérie (80) du rebord (74), un poinçon (92) cylindrique creux comportant sur sa face interne des dents (94) axiales de profil correspondant au profil de la face extérieure (16B) de la roue dentée à former, monté coulissant le long de la seconde partie (82) de matrice entre une position de repos dans laquelle une extrémité axiale du poinçon est en appui sur le rebord (72) et une position active dans laquelle ladite extrémité axiale se déplace le long de la première partie (74) de matrice pour former les dents de la roue en faisant fluer le métal du rebord entre les dents de la première partie de la matrice et celles du poinçon.

## Patentansprüche

1. Verfahren zur Herstellung einer mehrrilligen Riemenscheibe (2), bei welchem man das Metall des Umfangsbereichs (52; 152) einer im Wesentlichen flachen Scheibe (20; 120) durch Drücken dieses Umfangsbereichs fließen lässt, bis eine zur Scheibe koaxiale und sich zu beiden Seiten dieser Scheibe erstreckende zylindrische Flanke (8; 108) geformt wird, und dann in der Außenfläche der Flanke eine Reihe von Rillen formt, **dadurch gekennzeichnet, dass** in dem Schritt der Formung der zylindrischen Flanke auch mindestens eine radiale Wange (66; 166) geformt wird, die sich von mindestens einem der Ränder der Wange aus nach außen erstreckt, und dann die Wange vor oder nach dem Schritt der Rillenformung einem Arbeitsgang unterworfen wird, in dem Zähne geformt werden.

2. Verfahren nach Anspruch 1, **dadurch gekennzeichnet, dass** der Schritt der Formung der zylindrischen Flanke (108) und der radialen Wange (166) einen ersten Arbeitsgang, in dem am Umfang der Scheibe (120) ein Wulst (204) mit einer zur Scheibe koaxialen, im Wesentlichen zylindrischen Außenfläche geformt wird, und einen zweiten Arbeitsgang umfasst, in dem aus dem im ersten Arbeitsgang erhaltenen Wulst die Flanke und die radiale Wange geschaffen werden.

3. Verfahren nach Anspruch 2, **dadurch gekennzeichnet, dass** der Wulst (204) bezüglich der Hauptebene der Scheibe unsymmetrisch ist und zu beiden Seiten ihrer Hauptebene zwei ungleiche Werkstoffvolumen bildet, die an die vorbestimmten Werkstoffvolumen angepasst sind, die zu beiden Seiten der Ebene der Scheibe der herzustellenden Riemenscheibe erhalten werden sollen.

4. Verfahren nach einem der Ansprüche 1 bis 3, **dadurch gekennzeichnet, dass** die Wange vor dem Arbeitsgang der Formung zur Erhöhung ihres Fließvermögens einer Glühbehandlung unterzogen wird.

5. Verfahren nach einem der Ansprüche 1 bis 3, **dadurch gekennzeichnet, dass** der Arbeitsgang der Formung der Wange darin besteht, dass die Wange in ein zur Flanke koaxiales Zahnrad umgeformt wird.

6. Verfahren nach einem der vorhergehenden Ansprüche, **dadurch gekennzeichnet, dass** vor dem Schritt der Formung der zylindrischen Flanke in der Mitte der Scheibe eine Nabe geformt wird.

7. Vorrichtung zur Durchführung des Verfahrens nach Anspruch 1 mit Halteeinrichtungen (22, 24), die einen zentralen Bereich der Scheibe (20) einspannen, so dass ein Umfangskranz (52) der Scheibe sich außerhalb der Halteeinrichtungen erstreckt, **dadurch gekennzeichnet, dass** sie außerdem Folgendes aufweist: Einrichtungen zum rotierenden Antrieb der aus Scheibe und Halteeinrichtung bestehenden Einheit um die Achse der Scheibe, zwei ringförmige Organe (36, 38), die auf der Außenfläche der Halteeinrichtungen zu beiden Seiten des Kranzes befestigt sind und axial durch eine radiale Fläche (40, 48) ein radial nach außen offenes ringförmiges Volumen (V) abgrenzen, dessen Boden von der Außenfläche (26, 32) der Halteeinrichtungen gebildet ist, mindestens eine Rolle (54) mit zylindrischer Außenfläche, die auf einer zur Achse der Scheibe (20) parallelen und radial beweglichen Welle (56) drehbar montiert ist, wobei die Rolle (54) gegenüber der Öffnung des Volumens (V) angeordnet ist und mit der Welle zwischen einer Ruhestellung und einer aktiven Stellung beweglich ist, in der mindestens eine radiale Fläche der Rolle der ebenen Fläche (48) des benachbarten ringförmigen Organs (38) gegenübersteht, indem sie axial in einem Abstand (e), der im Wesentlichen gleich der vorbestimmten Dicke der zu formenden radialen Wange (66) ist, von dieser Seite angeordnet ist, sowie Einrichtungen zur Formung der Rillen (10) der Flanke und Einrichtungen zur Formung der Zähne mindestens einer Wange (66).

8. Vorrichtung nach Anspruch 7, **dadurch gekennzeichnet, dass**, wenn die Flanke zwei radiale Wangen aufweist, die beiden radialen Stirnflächen (60) der Rolle in der aktiven Stellung in einem Abstand von der benachbarten Fläche der zugeordneten Organe angeordnet sind, der im Wesentlichen gleich der vorbestimmten Dicke der entsprechenden Wangen ist.

9. Vorrichtung zur Durchführung des Verfahrens nach Anspruch 2 oder 3, die zur Durchführung des ersten Arbeitsgangs Halteeinrichtungen (122, 124) aufweist, die einen Bereich der Scheibe (120) einspannen, so dass ein Umfangskranz (152) der Scheibe sich außerhalb der Halteeinrichtungen in einem radial offenen Volumen (V) erstreckt, welches von einer seinen Boden bildenden zylindrischen Außenfläche der Halteeinrichtungen und von zwei zu beiden Seiten der Scheibe angeordneten radialen Flächen der Halteeinrichtungen abgegrenzt ist, sowie Einrichtungen zum rotierenden Antrieb der aus Scheibe und Rückhalteeinrichtungen bestehenden Einheit um die Achse der Scheibe, und die eine Rolle (154) besitzt, die auf einer zur Achse der Scheibe (120) parallelen und in dem Volumen (V) radial beweglichen Welle drehbar montiert ist, wobei die Rolle (154) eine zweistufige zylindrische Außenfläche besitzt, die eine auf einer Seite der Scheibe (120) angeordnete radiale Schulter (200) zur Formung eines Wulstes abgrenzt, der sich von der Schulter (200) aus zwischen dem Boden des Volumens (V) und der Fläche der den kleineren Durchmesser aufweisenden Stufe der Rolle erstreckt, **dadurch gekennzeichnet, dass** sie zur Durchführung des zweiten Arbeitsgangs zwei im Inneren des Volumens (V) zu beiden Seiten der Scheibe (120) befestigte ringförmige Organe (136, 138) aufweist, und zwar ein erstes ringförmiges Organ (136) mit einer radialen Stirnfläche (140), die mit einer ringförmigen Nut (210) zur Formung eines Randes der herzustellenden zylindrischen Flanke versehen ist, und ein zweites ringförmiges Organ (138) mit einer radialen Stirnfläche, die der Stirnfläche (140) des ersten ringförmigen Organs (136) gegenübersteht, von dieser axial entfernt ist und eine Aussparung (212) zur Aufnahme der radialen Wange (66) bei der Durchführung des zweiten Arbeitsgangs aufweist, sowie eine um eine Welle drehbar montierte und radial bewegliche Rolle mit zylindrischer Außenfläche zur Formung der Flanke und der radialen Wange durch Drehen der Halteeinrichtungen aufweist.

10. Vorrichtung nach einem der Ansprüche 7 bis 9, **dadurch gekennzeichnet, dass** sie mindestens eine weitere Rolle (64) aufweist, die von einer zur Achse der Scheibe (20, 120) parallelen und radial beweglichen Welle getragen ist, auf ihrer Außenfläche Rillen aufweist, die zu den zu formenden Rillen komplementär sind, und Mittel zur Formung der Rillen bildet.

11. Vorrichtung nach Anspruch 7 oder 9 zur Durchführung des Verfahrens nach Anspruch 5, **dadurch gekennzeichnet, dass** sie Folgendes aufweist: eine feststehende zylindrische Matrize, die aus einem ersten Teil (74) und einem zweiten Teil (82) besteht, die zu beiden Seiten der radialen Wange (72) angeordnet sind und zwischen denen ein ringförmiger Bereich der an den Rand der Flanke anschließenden Wange eingespannt ist, wobei der Umfang (80) der Wange aus der Matrize herausragt und der erste Teil (74) auf seiner Außenfläche axiale Zähne (79) aufweist, deren Profil dem der Innenfläche (16A) des zu formenden Zahnrads entspricht, ein Gleitstück (88), das auf dem ersten Teil (74) der Matrize axial gleiten kann und auf einer radialen Stirnfläche eine in Ruhestellung den Umfang (80) der Wange (74) aufnehmende ringförmige Aussparung (90) aufweist, und einen hohlen zylindrischen Stempel (92), der auf seiner Innenfläche axiale Zähne (94) aufweist, deren Profil dem der Außenfläche (16B) des zu formenden Zahnrads entspricht, und auf dem zweiten Teil (82) der Matrize zwischen einer Ruhestellung, in der ein axiales Ende des Stempels an der Wange (72) anliegt, und einer aktiven Stellung gleiten kann, in der dieses axiale Ende sich auf dem ersten Teil (74) der Matrize zur Formung der Zähne des Rades bewegt, indem es das Metall der Wange zwischen den Zähnen des ersten Teils der Matrize und denen des Stempels fließen lässt.

## Claims

1. Method of manufacturing a pulley (2) with multiple grooves in which the metal of the peripheral part (52; 152) of a substantially flat disc (20; 120) is made to creep by pushing back the peripheral part of the disc until a cylindrical flank (8; 108) is formed which is coaxial with the disc and extends on either side of the latter, then a series of grooves is formed in the outer surface of the flank, **characterised in that** in the step which consists of forming the cylindrical flank at least one radial rim (66; 166) is also formed which extends towards the exterior from at least one of the edges of the flank, then the rim is subjected to an operation of forming teeth which is carried out either before the step of forming the grooves or after this latter.

2. Method as claimed in Claim 1, **characterised in that** the step consisting of forming the cylindrical flank (108) and the radial rim (166) includes a first operation which consists of forming a flange (204) on the periphery of the disc (120), the flange having a substantially cylindrical outer face which is coaxial with the disc, and a second operation which consists of producing the flank and the radial rim from the flange obtained by the first operation.

3. Method as claimed in Claim 2, **characterised in that** the flange (204) is asymmetrical with respect to the general plane of the disc and delimits two unequal volumes of material which extend on either side of the general plane of the disc and are adapted to the predetermined volumes of material to be obtained on either side of the plane of the disc of the pulley to be produced.

4. Method as claimed in any one of claims 1 to 3, **characterised in that** prior to the forming operation, the rum is subjected to an annealing treatment in order to increase its ductility

5. Method as claimed in any one of Claims 1 to 3, **characterised in that** the operation of forming the rim consists of transforming the rim into a toothed wheel which is coaxial with the flank.

6. Method as claimed in any one of the preceding claims, **characterised in that** prior to the step consisting of forming the cylindrical flank, a boss is formed in the centre of the disc.

7. Apparatus for carrying out the method as claimed in Claim 1, comprising means for retaining (22, 24) a central part of the disc (20) by clamping in such a way that a peripheral crown (52) of the disc extends outside the retaining means, **characterised in that** it also comprises means for driving the disc/retaining means assembly in rotation about the axis of the disc, **characterised in that** it further comprises two annular parts (36, 38) which are fixed on the outer face of the retaining means on either side of the crown and axially delimit by a radial face (40, 48) an annular volume (V) which is radially open towards the exterior and having as its base the outer face (26, 32) of the retaining means, at least one knurling wheel (54) with a cylindrical outer surface is rotatably mounted on a shaft (56) parallel to the axis of the disc (20) and radially displaceable, the knurling wheel (54) being located facing the opening of the said volume (V) and displaceable with the shaft between a rest position and an active position in which at least one radial face of the knurling wheel is opposite the planar face (48) of the adjacent annular part (38), being axially spaced therefrom by a distance (e) which is substantially equal to the predetermined thickness of the radial rim (66) to be formed, means for forming the grooves (10) of the flank, and means for forming the teeth of at least one rim (66).

8. Apparatus as claimed in Claim 7, **characterised in that** when the flank has two radial rims the two radial end faces (60) of the knurling wheel in the active position arc spaced from the adjacent face of the associated parts by a distance substantially equal to the predetermined thickness of the corresponding rims.

9. Apparatus for carrying out the method as claimed in Claim 2 or 3, which in order to carry out the first operation includes means for retaining (122, 124) a part of the disc (120) by clamping in such a way that a peripheral crown (152) of the disc extends outside the retaining means in a radially open volume (V) which is delimited by an outer cylindrical face of the retaining means forming the base of the volume and by two radial surfaces of the retaining means which are situated on either side of the disc, means for driving the disc/retaining means assembly in rotation about the axis of the disc, and a knurling wheel (154) rotatably mounted on a shaft parallel to the axis of the disc (120) and radially displaceable in the said volume (V), the knurling wheel (154) having a two-stage cylindrical outer surface de limiting a radial shoulder (200) which is disposed on one side of the disc (120) in order to form a flange extending from the shoulder (200) between the base of the said volume (V) and the face of the stage of the knurling wheel having the smallest diameter, **characterised in that** in order to carry out the second operation it includes two annular parts (136,138) fixed in the interior of the said volume (V)on either side of the disc (120), a first annular part (136) having a radial end face (140) equipped with an annular groove (210) for the formation of an edge of the cylindrical flank to be obtained, the second annular part (138) having a radial end face facing and axially spaced from the end face (140) of the first annular part (136) and having a recess (212) to receive the radial rim (66) when the second operation is being carried out, and a knurling wheel with an outer cylindrical surface which is rotatably mounted about a shaft and radially displaccable in order to form the flank and the radial rim by setting the retaining means in rotation.

10. , Apparatus as claimed in any one of Claims 7 to 9, **characterised in that** it includes at least one other knurling wheel (64) which is borne by a shaft parallel to the axis of the disc (20, 120) and radially diplaceable, the said other knurling wheel (64) having on its outer face grooves which are complementary to the grooves to be formed, the said other knurling wheel (64) constituting means for forming the grooves.

11. Apparatus as claimed in Claim 7 or 9 and for carrying out the method as claimed in Claim 5, **characterised in that** it includes a fixed cylindrical die comprising a first (74) and a second (82) part which are disposed on either side of the radial rim (72) and between which is clamped an annular zone of the rim adjacent to the edge of the flank, the periphery (80) of the rim projecting outside the die, the first part (74) having on its outer surface axial teeth (79) having a profile corresponding to the profile of the inner face (16A) of the toothed wheel to be fofmed, a slider (88) mounted so as to slide axially along the first part (74) of the die and having on one radial end face an annular recess (90) which receives the periphery (80) of the rim (74) in the rest position, a hollow cylindrical ram (92) having on its inner face axial teeth (94) having a profile corresponding to the profil of the outer face (16B) of the toothed wheel to be formed, mounted so as to slide along the second part (82) of the die between a rest position in which one axial end of the ram is resting on the rim (72) and an active position in which the said axial end is displaced along the first part (74) of the die in order to form the teeth of the wheel by making the metal creep from the rim between the teeth of the first part of the die and those of the ram.
